# EUROPÄISCHE PATENTANMELDUNG

(11) **EP 2 604 122 A1**
(43) Veröffentlichungstag der Anmeldung: **19.06.2013**
(21) Anmeldenummer: 11193104.4
(22) Anmeldetag: 12.12.2011
(51) Int. Cl.: A23B 9/02, A23L 3/00, A23L 3/16, A61L 2/00

(54) **Vorrichtung und Verfahren zum Sterilisieren und/oder Pasteurisieren eines Lebensmittels**

(71) Anmelder: Bühler Barth AG, 71691 Freiberg (DE)
(72) Erfinder: Perren, Rainer, 6022 Grosswangen (CH); Conde-Petit, Béatrice, 8048 Zürich (CH); Keller, Mario, 8514 Bisegg (CH)
(74) Vertreter: Hepp Wenger Ryffel AG

(57) **Zusammenfassung**

Die erfindungsgemässe Vorrichtung (1) zum Sterilisieren und/oder Pasteurisieren eines Lebensmittels (10) umfasst einen Behälter (2) mit einem Innenraum (3) zur Aufnahme des Lebensmittels (10). Zudem weist die Vorrichtung (1) eine steuerbare und/oder regelbare Druckeinstellungsvorrichtung (4) zur Einstellung eines Überdrucks und/oder Unterdrucks im Innenraum (3) auf. Weiter weist die Vorrichtung (1) eine steuerbare und/oder regelbare Einrichtung zur Beaufschlagung des Innenraums mit Dampf auf. Insbesondere wird der Innenraum mit Wasserdampf beaufschlagt. Die Vorrichtung (1) weist im Innenraum (3) ein Aufnahmevolumen für das Lebensmittel (10) von maximal 1000 cm3 auf. Weiter umfasst die Vorrichtung (1) eine Temperiereinrichtung (7) zur Temperierung des Lebensmittels(10). Insbesondere ist die Temperiereinrichtung (7) so ausgestaltet, dass die Temperierung des Lebensmittels (10) vor der Beaufschlagung des Lebensmittels (10) mit Dampf erfolgen kann.

## Beschreibung

Die Erfindung betrifft eine Vorrichtung und ein Verfahren zum Sterilisieren und/oder Pasteurisieren eines Lebensmittels sowie ein Verfahren zur Validierung eines industriellen Sterilisierungs- und/oder Pasteurisierungsverfahrens gemäss dem Oberbegriff der unabhängigen Ansprüche.

Aus der WO 2009/003546 Al ist ein Verfahren zur Oberflächenpasteurisation und zur Oberflächensterilisation von partikulären Lebensmittelprodukten bekannt. Die Lebensmittelprodukte werden gemäss der Offenbarung vor der Pasteurisierung bzw. Sterilisierung auf eine Temperatur wenige Grade unterhalb der entsprechenden Pasteurisations- oder Sterilisationstemperatur vorgewärmt. Die Pasteurisation wird bei Temperaturen zwischen 55 °C und 99 °C bei einem niedrigen Pasteurisationsdruck durchgeführt und die Sterilisation bei Temperaturen zwischen 100 °C und 140 °C bei einem höheren Sterilisationsdruck. Für diese Verfahren wird eine Vorrichtung offenbart, die sich für industrielle Anwendungen eignet. Diese Vorrichtung weist einen Vorwärmbehälter zum Vorwärmen der Lebensmittelprodukte auf, die daraufhin in den Behälter zur Behandlung gefördert werden und mittels Dampf pasteurisiert oder sterilisiert werden.

Bekannte industriell anwendbare Anlagen haben den Nachteil, dass heutzutage immer häufiger die notwendige Beurteilung, d. h. Validierung, von Pasteurisations- und Sterilisationsverfahren nicht erfolgen kann, da hierfür pathogene Mikroorganismen wie beispielsweise Salmonellen-Stämme in die Vorrichtung eingebracht werden müssen. Ein derartiges Einbringen von pathogenen Mikroorganismen in eine industriell einsetzbare Vorrichtung ist jedoch aus hygienischen Gründen häufig nicht möglich. Zudem sind derartige Anlagen kostspielig und haben ein grosses Aufnahmevolumen für zu behandelnde Lebensmittel, weshalb deren Verwendung lediglich zur Überprüfung der Effektivität eines Pasteurisations-und/oder Sterilisationsverfahrens oft nicht möglich ist. Zudem haben diese industriell verwendbaren Vorrichtungen auch nicht immer die notwendige Flexibilität zur Validierung respektive zur Weiterentwicklung verschiedener Verfahren zur Sterilisierung und/oder Pasteurisierung.

Es ist daher eine Aufgabe der vorliegenden Erfindung, die Nachteile des bekannten zu vermeiden und insbesondere eine Vorrichtung und ein Verfahren zur Pasteurisierung und/oder Sterilisierung bereitzustellen, welche kostengünstig herstellbar und flexibel einsetzbar sind. Eine weitere Aufgabe der vorliegenden Erfindung ist zudem die Bereitstellung eines Verfahrens zur Validierung eines industriellen Sterilisierungs- und/oder Pasteurisierungsverfahrens, welches sich insbesondere zur Weiterentwicklung von bekannten Verfahren zur Sterilisierung und/oder Pasteurisierung eignet.

Diese Aufgaben werden durch eine Vorrichtung und die Verfahren gemäss den unabhängigen Ansprüchen gelöst.

Die erfindungsgemässe Vorrichtung zum Sterilisieren und/oder Pasteurisieren eines Lebensmittels umfasst einen Behälter mit einem Innenraum zur Aufnahme des Lebensmittels. Zudem weist die Vorrichtung eine steuerbare und/oder regelbare Druckeinstellungsvorrichtung zur Einstellung eines Überdrucks und/oder Unterdrucks im Innenraum auf. Weiter weist die Vorrichtung eine steuerbare und/oder regelbare Einrichtung zur Beaufschlagung des Innenraums mit Dampf auf. Insbesondere wird der Innenraum mit Wasserdampf beaufschlagt. Die Vorrichtung weist im Innenraum ein Aufnahmevolumen für das Lebensmittel im Bereich von 2 bis 5000 cm³ auf. Bevorzugt weist der Innenraum ein Aufnahmevolumen für das Lebensmittel im Bereich von 2 bis 100 cm³ und besonders bevorzugt im Bereich von 2 bis 10 cm³ auf. Weiter umfasst die Vorrichtung eine Temperiereinrichtung zur Temperierung des Lebensmittels. Insbesondere ist die Temperiereinrichtung so ausgestaltet, dass die Temperierung des Lebensmittels vor der Beaufschlagung des Lebensmittels mit Dampf erfolgen kann.

Unter den Begriffen "Sterilisieren und/oder Pasteurisieren" wird im Sinne der vorliegenden Anmeldung eine Behandlung eines Lebensmittels beispielsweise mit Dampf unter erhöhter Temperatur gegenüber der üblichen Umgebungstemperatur, die etwa 25 °C beträgt, zur Reduktion der Anzahl von pathogenen Mikroorganismen auf und/oder in dem Lebensmittel verstanden.

Unter der Formulierung "A und/oder B" wird im Sinne der vorliegenden Anmeldung verstanden, dass folgende Kombinationen möglich sind: A alleine; B alleine; A und B.

Unter dem Begriff "Überdruck" wird im Sinne der vorliegenden Anmeldung ein Druck grösser als der Umgebungsdruck verstanden. Insbesondere wird unter einem Überdruck ein Druck im Bereich von grösser 1.01 bar bis 3.5 bar Absolutdruck verstanden.

Unter dem Begriff "Unterdruck" wird im Sinne der vorliegenden Anmeldung ein Druck kleiner als der Umgebungsdruck verstanden. Insbesondere wird unter einem Unterdruck ein Druck im Bereich von 0.1 bar bis kleiner 0.99 bar Absolutdruck verstanden.

Unter dem Begriff "Umgebungsdruck" wird im Sinne der vorliegenden Anmeldung ein Normdruck von 1.023 bar Absolutdruck verstanden.

Unter einem "Lebensmittel" werden im Sinne der vorliegenden Anmeldung für den menschlichen Verzehr geeignete Lebensmittel verstanden, insbesondere proteinhaltige Lebensmittel, stärkehaltige Lebensmittel und ölhaltige Lebensmittel oder beliebige Kombinationen daraus. Insbesondere sind Lebensmittel im Sinne der vorliegenden Anmeldung stückige und/oder pulverförmige Lebensmittel.

Als stärkehaltige Lebensmittel werden im Sinne der vorliegenden Anmeldung Cerealien, d. h. kultivierte Pflanzen der botanischen Familie der Süssgräser, Getreide, Reis, Mais, Pseudocerealien wie Amaranth oder Quinoa und beliebige Kombinationen daraus verstanden.

Unter "proteinhaltigen Lebensmitteln" werden im Sinne der vorliegenden Anmeldung Hülsenfrüchte wie beispielsweise Soja, Lupinen und getrocknete, pulverförmige Produkte aus Milch und beliebige Kombinationen daraus verstanden.

Unter "ölhaltigen Lebensmitteln" werden im Sinne der vorliegenden Anmeldung Nüsse wie beispielsweise Haselnüsse, Mandeln, Pistazien, Cashews, Macadamia, Baumnüsse, Pecannüsse, Paranüsse, Ölsaaten wie Sesam-Samen, Leinsamen, Erdnüsse, Sonnenblumenkerne oder Samen von anderen Pflanzen und beliebige Kombinationen daraus verstanden.

Beispielsweise werden als Lebensmittel auch Pflanzenteile von Kräutern und andere Lebensmittel aus Stängeln, Blätter, Wurzeln, Knollen, Samen, Knospen, Blüten sowie Gewürze in beliebiger Darreichungsform, d. h. beispielsweise unvermahlen oder vermahlen, verstanden.

Unter dem "Aufnahmevolumen" wird im Sinne der vorliegenden Anmeldung das Volumen im Innenraum des Behälters verstanden, welcher zur Aufnahme des Lebensmittels geeignet und vorgesehen ist. Üblicherweise ist das Aufnahmevolumen für das Lebensmittel im Innenraum kleiner als das Volumen des Innenraums.

Unter "Dampf" wird im Sinne der vorliegenden Anmeldung ein gasförmiges Medium mit einer Feuchtigkeit verstanden. Insbesondere wird unter "Dampf" Wasserdampf verstanden. Alternativ und/oder zusätzlich kann der Dampf auch weitere Komponenten wie beispielsweise Alkohol, Ozon, oxidative Komponenten und konservierende Säure wie beispielsweise Essig und beliebige Kombinationen daraus aufweisen. Somit kann das gasförmige Medium verdampftes Wasser, verdampften Alkohol, Ozon, verdampfte oxidative Komponenten und verdampfte konservierende Säure und beliebige Kombinationen daraus enthalten.

Die erfindungsgemässe Vorrichtung hat den Vorteil, dass mit dieser ein Pasteurisierungs- und/oder Sterilisierungsverfahren einfach und flexibel durchführbar ist und die Vorrichtung insbesondere aufgrund der kleinen Dimensionen kostengünstig herstellbar ist. Zudem ist die Temperierung des Lebensmittels in der Vorrichtung vor der Pasteurisierung und/oder Sterilisierung gut kontrollierbar durchführbar. Dies hat den Vorteil, dass eine Validierung von industriellen Sterilisierungs- und/oder Pasteurisierungsverfahren zuverlässig möglich ist. Insbesondere hat das Temperieren, d. h. das Vorwärmen, den Vorteil, dass im nachfolgenden Pasteurisierungs- und/oder Sterilisierungsschritt die Kondensation von Dampf auf der Produktoberfläche und damit eine zu grosse Flüssigkeitsaufnahme des Lebensmittels vermieden wird. Eine derartige Flüssigkeitsaufnahme macht oft einen anschliessenden Trocknungsschritt notwendig, was zu einer Beeinträchtigung der Qualität des Lebensmittels führen kann.

Bevorzugt ist die Einrichtung zur Beaufschlagung mit Dampf als Dampfzuführungsvorrichtung zur Zuführung von Dampf in den Innenraum ausgebildet.

Eine derartige Dampfzuführungsvorrichtung ist beispielsweise an eine ausserhalb des Behälters angeordnete Dampferzeugungseinrichtung angeschlossen, die insbesondere unter Überdruck steht. Mittels Steuern und/oder Regeln beispielsweise eines Ventils, welches beispielsweise in einer Leitung zwischen der Dampferzeugungseinrichtung und dem Behälter angeordnet ist, ist somit die Dampfzuführung einstellbar.

Dies hat den Vorteil der kontrollierten Zuführbarkeit von Dampf in den Behälter zur Pasteurisierung und/oder Sterilisierung. Durch die Trennung von Behälter und Dampferzeugungseinrichtung, die miteinander mit der Dampfzuführungsvorrichtung verbunden sind, wird eine modulare Bauweise erreicht, was die Vorrichtung flexibler und kostengünstiger in der Herstellung und bei der Installation macht.

Besonders bevorzugt ist die Einrichtung zur Beaufschlagung mit Dampf als Dampferzeugungseinrichtung zur Erzeugung von Dampf im Innenraum ausgebildet.

Mit anderen Worten ist also die Dampferzeugungseinrichtung im Behälter angeordnet.

Dies hat den Vorteil, dass die Vorrichtung kompakt ausgestaltbar ist. Zudem wird dadurch die Bedienung der Vorrichtung erleichtert, da keine weiteren Quellen für die Zufuhr von Dampf mit dem Behälter zu verbinden sind.

Bevorzugt ist es auch möglich, eine Vorrichtung mit einer Dampfzuführungsvorrichtung und einer Dampferzeugungsvorrichtung auszugestalten. Dies hat den Vorteil, dass Dampf mit unterschiedlichen Eigenschaften, beispielsweise bezüglich Temperatur und/oder Zusammensetzung, zur flexibleren und effizienteren Entwicklung von Pasteurisierungs- und/oder Sterilisierungsverfahren gleichzeitig zuführbar ist.

Ganz besonders bevorzugt ist die Druckeinstellungsvorrichtung als steuerbare und/oder regelbare Vakuumpumpe ausgebildet. Insbesondere ist die Vakuumpumpe als Wasserstrahlpumpe ausgebildet. Die Vakuumpumpe steht in Strömungsverbindung mit dem Innenraum, wobei insbesondere zwischen dem Innenraum und der Vakuumpumpe ein steuerbares und/oder regelbares Ventil angeordnet ist.

Als Vakuumpumpe wird im Sinne der vorliegenden Anmeldung eine Pumpe verstanden, mit der im Behälter ein Unterdruck erzeugbar ist.

Diese Ausgestaltung der Vorrichtung hat den Vorteil, dass in vielen Entwicklungslabors bereits vorhandene Vakuumpumpen verwendet werden können, was die Vorrichtung kostengünstiger macht. Durch die Verwendung eines steuerbaren und/oder regelbaren Ventils in der Strömungsverbindung zwischen Innenraum und Vakuumpumpe wird eine flexible und kostengünstige Möglichkeit der Einstellung des Unterdrucks erreicht.

Alternativ zu einer Vakuumpumpe ist es möglich, eine Pumpe zur Überdruckerzeugung zu verwenden, um im Innenraum einen Überdruck beispielsweise zur Durchführung eines Sterilisierungsverfahrens zu erzeugen.

Bevorzugt weist die Vorrichtung zumindest einen Sensor zur Messung zumindest einer Betriebsgrösse im Innenraum auf. Insbesondere weist die Vorrichtung zumindest einen Drucksensor und optional einen Temperatursensor oder Feuchtigkeitssensor oder beliebige Kombinationen daraus auf. Mit anderen Worten kann die Vorrichtung also lediglich einen Drucksensor aufweisen, einen Drucksensor und einen Temperatursensor, einen Drucksensor und einen Feuchtigkeitssensor oder einen Temperatursensor und einen Feuchtigkeitssensor und einen Drucksensor.

Dies hat den Vorteil, dass für den Bediener die Betriebsgrössen Temperatur, Druck und Feuchtigkeit bekannt sind, was die Möglichkeit der Steuerung und/oder Regelung des Pasteurisierungs-und/oder Sterilisierungsverfahrens ermöglicht. Zudem erlaubt dies eine Speicherung dieser Betriebsgrössen zur Protokollierung und/oder Weiterentwicklung von Verfahren zur Pasteurisierung und/oder Sterilisierung eines Lebensmittels.

Der Temperatursensor ist möglichst benachbart und insbesondere im Kontakt mit zumindest einem Teil des Lebensmittels angeordnet, um die Temperatur des Lebensmittels während der Behandlung möglichst zuverlässig und genau bestimmen zu können.

Besonders bevorzugt ist die Temperiereinrichtung als Einrichtung zur Zuführung eines Gases ausgebildet. Dieses Gas ist insbesondere konditioniert. Insbesondere wird erwärmte Luft zugeführt.

Unter einem "konditionierten Gas" wird im Sinne der vorliegenden Anmeldung ein auf eine vorgewählte Temperatur und/oder vorgewählte Feuchtigkeit eingestelltes Gas verstanden.

Dies hat den Vorteil, dass mittels des zugeführten Gases das Lebensmittel zuverlässig temperiert wird. Zudem ist eine derart ausgestaltete Temperiereinrichtung kostengünstig herstellbar und zuverlässig im Betrieb.

Beispielsweise kann eine derartige Temperiereinrichtung als elektrischer Durchlauferhitzer für Luft ausgebildet sein, der mittels eines steuerbaren und/oder regelbaren Ventils mit dem Behälter verbunden ist.

Ganz besonders bevorzugt ist die Temperiereinrichtung zur Temperierung des Lebensmittels im Innenraum und/oder in Wärmeleitungsverbindung mit dem Innenraum angeordnet. Insbesondere ist eine derartige Temperiereinrichtung als Heizstrahler und/oder Heizplatte ausgebildet. Mit anderen Worten kann also die Temperiereinrichtung beispielsweise ausserhalb des Innenraums angeordnet sein auf der Aussenseite des Behälters, wobei durch eine Kontaktfläche der Innenraum und damit das Lebensmittel temperiert wird.

Dies hat den Vorteil, dass die Vorrichtung kompakt ausgestaltet ist, da keine weiteren Einrichtungen zur Temperierung ausserhalb des Behälters angeordnet und mit dem Behälter verbunden werden müssen und eine zuverlässige und gleichmässige Temperierung des Lebensmittels erfolgen kann.

Beispielsweise ist es auch möglich, die Temperiereinrichtung als Einrichtung zur Zuführung eines Gases und als im Innenraum angeordnete Einrichtung wie vorstehend beschrieben auszubilden. Bei einer derartigen Ausgestaltung sind also gleichzeitig die Zuführung eines Gases und auch die Anordnung eines Heizstrahlers und/oder einer Heizplatte im Innenraum denkbar. Dies führt zu einer weiter verbesserten Kontrollierbarkeit des Temperierungsschritts.

Ganz besonders bevorzugt weist die Vorrichtung eine Inokulierungseinrichtung zum Inokulieren des Lebensmittels im Behälter auf. Eine derartige Inokulierungseinrichtung kann als Zuführvorrichtung auf in dem Behälter befindliche Lebensmittel, beispielsweise als Einspritzdüse oder auch als Benetzungseinrichtung, ausgebildet sein. Zudem weist die Inokulierungseinrichtung insbesondere ein Reservoir an insbesondere pathogenen Mikroorganismen zur Zuführung zum Lebensmittel auf. Beispielsweise ist es möglich, die pathogenen Mikroorganismen in eine wässrige Lösung einzubringen, welche dann beispielsweise mittels der Einspritzdüse oder auch der Benetzungseinrichtung auf das Lebensmittel im Behälter gefördert werden kann.

Beispielsweise kann die Inokulierungseinrichtung eine Benetzungseinrichtung und eine Mischeinrichtung zum Mischen der insbesondere pathogenen Mikroorganismen mit einer Flüssigkeit wie beispielsweise Wasser umfassen, wobei die Benetzung des Lebensmittels, insbesondere das Aufspritzen, mittels der Benetzungseinrichtung erfolgt. Insbesondere erfolgt der Schritt des Mischens der Mikroorganismen mit der Flüssigkeit gleichzeitig mit dem Schritt des Benetzens. Dies kann beispielsweise durch Zuführen der Mikroorganismen in die Benetzungseinrichtung erfolgen, wo diese durch Zuführen von Flüssigkeit in die Benetzungseinrichtung mit der Flüssigkeit gemischt und auf das Lebensmittel aufgebracht werden.

Anschliessend an die Schritte des Mischens und Benetzens erfolgt insbesondere ein Trocknen des Lebensmittels, bevorzugt für zumindest 24 Stunden, insbesondere für zumindest 12 Stunden und weiter insbesondere für zumindest 8 Stunden. Der Schritt des Trocknens wird bevorzugt mit der Temperiereinrichtung durchgeführt. Insbesondere wird für die Trocknung des Lebensmittels sterilfiltriertes Gas, bevorzugt Luft, verwendet. Eine Sterilfiltrierung von Gas, welches in den Innenraum zugeführt und nicht im Innenraum erzeugt wird, ist vorteilhaft, um den Inokulierungsprozess besser reproduzierbar durchführen zu können. Unter dem Begriff "Sterilfiltrierung eines Gases" wird im Sinne der vorliegenden Anmeldung eine Filtrierung des Gases zur Reduzierung der Anzahl von insbesondere pathogenen Mikroorganismen in dem Gas verstanden, insbesondere zumindest um den Faktor 100000.

Anschliessend an den Schritt des Trocknens erfolgt der Schritt des Pasteurisierens und/oder Sterilisierens.

Ohne die Erfindung darauf zu beschränken hat der Schritt des Trocknens den Effekt, dass die insbesondere pathogenen Mikroorganismen eine Hitzeresistenz erhalten; Mikroorganismen mit einer Hitzeresistenz kommen häufig als Kontaminierung von Lebensmitteln vor, weshalb die Resultate von mit der erfindungsgemässen Vorrichtung durchgeführten Versuchen im Wesentlichen Industrie-Bedingungen entsprechen, was diese Versuche aussagekräftiger macht. Zudem wird dadurch erreicht, dass das inokulierte Lebensmittel im Wesentlichen wieder die Feuchte vor der Inokulierung aufweist.

Das Vorsehen einer Inokulierungseinrichtung hat den Vorteil, dass die Inokulierung gezielt innerhalb der Vorrichtung durchgeführt werden kann, was die Bedienung der Vorrichtung erleichtert, da die insbesondere pathogenen Mikroorganismen nicht ausserhalb der Vorrichtung gehandhabt werden müssen.

Bevorzugt ist die Vorrichtung mit einer Steuer- und/oder Regeleinheit verbunden. Insbesondere ist diese Steuer- und/oder Regeleinheit als Computer ausgebildet. Die Steuer- und/oder Regeleinheit ist zur Steuerung und/oder Regelung zumindest einer der Betriebsgrössen Temperatur, Druck und Feuchtigkeit oder beliebiger Kombinationen daraus mit der Vorrichtung verbunden.

Mit anderen Worten ist also die Steuer- und/oder Regeleinheit zumindest mit einer der folgenden Einheiten verbunden: Druckeinstellungsvorrichtung; Einrichtung zur Beaufschlagung des Innenraums mit Dampf; Temperiereinrichtung; Inokulierungseinrichtung.

Dies hat den Vorteil, dass die Vorrichtung mit insbesondere einer zentralen Steuer- und/oder Regeleinheit betrieben werden kann, was beispielsweise die Pasteurisierung und/oder Sterilisierung des Lebensmittels mittels zeitlicher Variation der Grössen Temperatur, Druck und Feuchtigkeit oder beliebiger Kombinationen daraus erlaubt. Somit ist das Verfahren flexibel steuerbar und/oder regelbar, was insbesondere die Validierung verschiedener Verfahren zur Pasteurisierung und/oder Sterilisierung erleichtert.

Besonders bevorzugt sind in der Steuer- und/oder Regeleinheit zumindest eine der Betriebsgrössen Temperatur, Druck und Feuchtigkeit oder beliebige Kombinationen daraus speicherbar, insbesondere als Funktion der Zeit.

Dies hat den Vorteil der besseren Überprüfbarkeit beispielsweise einer vorgenommenen Validierung eines industriellen Prozesses, was aus hygienerechtlichen Gründen vorteilhaft ist. Zudem erlaubt die Speicherung der Betriebsgrössen insbesondere als Funktion der Zeit, d. h. beispielsweise Temperatur-Zeit-Paare, in Abhängigkeit von einer später bestimmten Effizienz des Pasteurisierungs- und/oder Sterilisierungsverfahrens derartige Verfahren weiterzuentwickeln und zu verbessern.

Ganz besonders bevorzugt umfasst die Vorrichtung eine insbesondere steuerbare und/oder regelbare Dampfabführeinrichtung, die mit dem Innenraum strömungsverbunden ist.

Bevorzugt weist die Dampfabführeinrichtung eine Ablassleitung auf, wobei insbesondere in der Ablassleistung ein steuerbares und/oder regelbares Ablassventil und/oder ein Ablassfilter angeordnet sind. Es ist auch möglich, in der Ablassleitung alternativ oder zusätzlich einen Kondensator zur Ausscheidung von Flüssigkeit aus dem Dampf und/oder eine steuerbare und/oder regelbare Dampfpumpe anzuordnen.

Unter einer "Dampfpumpe" wird im Sinne der vorliegenden Anmeldung eine Pumpe zur Förderung von Dampf aus dem Innenraum verstanden.

Die Anordnung eines steuerbaren und/oder regelbaren Ablassventils in der Vorrichtung hat den Vorteil, dass die Dampfmenge entsprechend den geforderten Betriebsbedingungen im Innenraum abführbar ist.

Die Anordnung eines Kondensators in der Ablassleitung hat den Vorteil, dass durch die Abscheidung von Flüssigkeit aus dem Dampf die abzuführende Dampfmenge reduziert wird, so dass weniger Dampf in die Umgebung gefördert wird. Insbesondere in Kombination mit der Dampfpumpe, wobei der Kondensator in der Ablassleitung in Förderrichtung des Dampfes zwischen Innenraum und Dampfpumpe angeordnet ist, hat dies den Vorteil, dass eine Dampfpumpe mit geringerem Pumpvolumen ausreichend ist, was kostengünstiger und auch energetisch günstiger ist. Zudem ist mit der steuerbaren und/oder regelbaren Dampfpumpe die abgeführte Dampfmenge aus dem Innenraum noch besser einstellbar.

Ein weiterer Aspekt der vorliegenden Erfindung betrifft ein Verfahren zum Sterilisieren und/oder Pasteurisieren eines insbesondere partikulären Lebensmittels. Dieses Verfahren wird insbesondere mit einer Vorrichtung wie oben beschrieben durchgeführt.

Das Verfahren umfasst einen ersten Schritt des Bereitstellens einer Vorrichtung umfassend einen Behälter mit einem Innenraum zur Aufnahme des Lebensmittels. Zudem weist die Vorrichtung eine steuerbare und/oder regelbare Druckeinstellungsvorrichtung zur Einstellung eines Überdrucks und/oder Unterdrucks im Innenraum auf. Zudem ist eine steuerbare und/oder regelbare Einrichtung zur Beaufschlagung des Innenraums mit Dampf vorgesehen, wobei insbesondere Wasserdampf verwendet wird. Die Vorrichtung weist im Innenraum ein Aufnahmevolumen im Bereich von 2 bis 5000 cm³ für das Lebensmittel auf. Zudem umfasst die Vorrichtung eine Temperiereinrichtung zur Temperierung des Lebensmittels, insbesondere im Innenraum.

Anschliessend erfolgt ein Steuern und/oder Regeln eines Drucks, insbesondere eines Überdrucks und/oder eines Unterdrucks, im Innenraum. Zudem erfolgt vor, nach oder auch gleichzeitig mit dem Steuern und/oder Regeln eines Drucks im Innenraum ein Temperieren des Lebensmittels im Innenraum auf eine Temperatur kleiner oder gleich der Pasteurisierungs- und/oder Sterilisierungstemperatur.

Anschliessend an das Temperieren und Steuern und/oder Regeln des Drucks im Innenraum erfolgt ein Beaufschlagen des Innenraums mit Dampf. Dadurch erfolgt ein Sterilisieren und/oder Pasteurisieren des temperierten Lebensmittels mittels des Dampfes zur Erzielung einer Reduktion der Anzahl eines auf und/oder im Lebensmittel vorhandenen pathogenen Mikroorganismus zumindest um den Faktor log 3. Bevorzugt erfolgt eine Reduktion zumindest um den Faktor log 4 und besonders bevorzugt zumindest um den Faktor log 5. Insbesondere ist auch das Erreichen einer höheren Reduktion von mehr als 5 log-Einheiten bis hin zur vollständigen Sterilität möglich.

Unter einer "Reduktion um den Faktor log 3" wird im Sinne der vorliegenden Anmeldung eine Reduktion um den Faktor 1000 verstanden. Analog hierzu bedeutet eine Reduktion um den Faktor log 4 eine Verringerung um den Faktor 10'000 und eine Reduktion um den Faktor log 5 eine Verringerung um den Faktor 100'000.

Unter einer Pasteurisierungstemperatur wird im Sinne der vorliegenden Anmeldung eine Temperatur im Bereich von 55 °C bis 99 °C und insbesondere im Bereich von 70 °C bis 90 °C verstanden.

Unter einer Sterilisierungstemperatur wird im Sinne der vorliegenden Anmeldung eine Temperatur von grösser 100 °C und insbesondere im Bereich von 105 °C bis 140 °C verstanden.

Dieses Verfahren wird mit der oben beschriebenen Vorrichtung durchgeführt und weist deshalb die entsprechenden Vorteile auf.

Mittels des hier beschriebenen Verfahrens kann also das Sterilisieren und/oder Pasteurisieren des Lebensmittels in Abhängigkeit von einer zeitabhängigen Temperatur, einer zeitabhängigen Feuchtigkeit oder einem zeitabhängigen Druck oder beliebigen Kombinationen daraus erfolgen. Diese Betriebsgrössen werden wie oben erläutert insbesondere mittels der Steuer- und/oder Regeleinheit eingestellt.

Bevorzugt wird das Lebensmittel vor dem Fördern in den Innenraum temperiert.

Dies hat den Vorteil, dass das Verfahren schneller durchgeführt werden kann, da hierdurch bereits eine Vortemperierung stattfindet und die Temperierung nicht notwendigerweise vollständig in der Vorrichtung durchgeführt werden muss.

Besonders bevorzugt wird das Lebensmittel vor einem der Verfahrensschritte Temperieren, Sterilisieren und/oder Pasteurisieren mit einem pathogenen Mikroorganismus, insbesondere einem Salmonellen-Stamm, inokuliert.

Dies hat den Vorteil, dass zur zuverlässigen Validierung von industriellen Sterilisierungs- und/oder Pasteurisierungsverfahren standardisierte, pathogene Mikroorganismen verwendet werden können.

Beispielsweise dient das Bakterium Enterococcus faecium NRRL B-2354 als Austauschmittel für das Bakterium Salmonella enteritidis phage type 30, welches aus hygienischen Gründen nicht in industriell verwendete Vorrichtungen eingebracht werden darf. Vorliegend kann jedoch auch das Bakterium Salmonella enteritidis phage type 30 verwendet werden, da die verwendete Vorrichtung keine industriell verwendbare Vorrichtung ist, so dass ein Vergleich des Verhaltens der verschiedenen Bakterien in der Vorrichtung möglich ist.

Ein zusätzlicher Aspekt der vorliegenden Erfindung betrifft ein Verfahren zur Validierung eines industriellen Sterilisierungs-und/oder Pasteurisierungsverfahrens. Dieses Verfahren umfasst die Schritte des Bereitstellens einer Vorrichtung wie oben beschrieben. Anschliessend wird ein Verfahren wie oben beschrieben durchgeführt. Mit anderen Worten wird also ein Lebensmittel sterilisiert und/oder pasteurisiert. Anschliessend erfolgt ein Bestimmen der erzielten Reduktion eines auf und/oder in dem Lebensmittel vorhandenen pathogenen Mikroorganismus.

Dieses Verfahren hat den Vorteil, dass die Effizienz des analogen industriellen Verfahrens zum Sterilisieren und/oder Pasteurisieren eines Lebensmittels validiert werden kann.

Bevorzugt wird das industrielle Sterilisierungs- und/oder Pasteurisierungsverfahren anhand der erzielten Reduktion des pathogenen Mikroorganismus und zumindest einer der gespeicherten Betriebsgrössen Temperatur, Druck und Feuchtigkeit oder beliebiger Kombinationen daraus optimiert.

Dies hat den Vorteil, dass industrielle Verfahren zum Sterilisieren und/oder Pasteurisieren nicht nur validiert, sondern auch verbessert werden können.

Ein weiterer Aspekt der vorliegenden Erfindung betrifft die Verwendung einer Vorrichtung wie oben beschrieben. Mit dieser Vorrichtung wird insbesondere ein Verfahren wie oben beschrieben durchgeführt: die Vorrichtung wird verwendet zur Sterilisierung und/oder Pasteurisierung eines Lebensmittels. Zudem kann die Vorrichtung zur Validierung eines industriellen Sterilisierungs-und/oder Pasteurisierungsverfahrens verwendet werden. Insbesondere werden Sterilisierungs- und/oder Pasteurisierungsverfahren für proteinhaltige Lebensmittel, stärkehaltige Lebensmittel und ölhaltige Lebensmittel oder beliebige Kombinationen daraus durchgeführt und/oder validiert. Bevorzugt werden als ölhaltige, stärkehaltige und/oder proteinhaltige Lebensmittel Kakaobohnen, Nüsse wie beispielsweise Pistazien, Mandeln, Baumnüsse, Gewürze in beliebiger trockener Form und Cerealien sowie beliebige Kombinationen daraus verwendet.

Die Erfindung wird nachfolgend anhand von Ausführungsbeispielen zum besseren Verständnis näher erläutert, ohne diese auf diese zu beschränken. Es zeigen:
- Figur 1:: Schematische Darstellung einer Vorrichtung zur erfindungsgemässen Behandlung eines Lebensmittels mit einer Steuer- und/oder Regeleinheit;
- Figur 2:: schematische Darstellung der erfindungsgemässen Vorrichtung gemäss Figur 1 mit Druckeinstellungsvorrichtung, Dampfzuführungsvorrichtung und Temperiereinrichtung;
- Figur 3:: schematische Darstellung einer alternativen, erfindungsgemässen Vorrichtung gemäss Figur 1 mit einer zusätzlichen Dampferzeugungsvorrichtung;
- Figur 4:: schematische Darstellung einer weiteren alternativen, erfindungsgemässen Vorrichtung zur Behandlung eines Lebensmittels;
- Figur 5:: schematische Darstellung einer erfindungsgemässen Vorrichtung zur Behandlung eines Lebensmittels mit einer alternativen Temperiereinrichtung;
- Figur 6:: schematische Darstellung einer erfindungsgemässen Vorrichtung zur Behandlung eines Lebensmittels mit einer Temperiereinrichtung und einer Dampferzeugungseinrichtung;
- Figur 7:: schematische Darstellung einer weiteren erfindungsgemässen Vorrichtung zur Behandlung eines Lebensmittels

- Figur 8:: mit einer Dampfzuführungsvorrichtung und einer Temperiereinrichtung; schematische Darstellung einer erfindungsgemässen Vorrichtung gemäss Figur 4 mit einer alternativen Anordnung der Temperiereinrichtung;
- Figur 9:: schematische Darstellung einer weiteren erfindungsgemässen Vorrichtung zur Behandlung eines Lebensmittels mit einer Dampfpumpe.

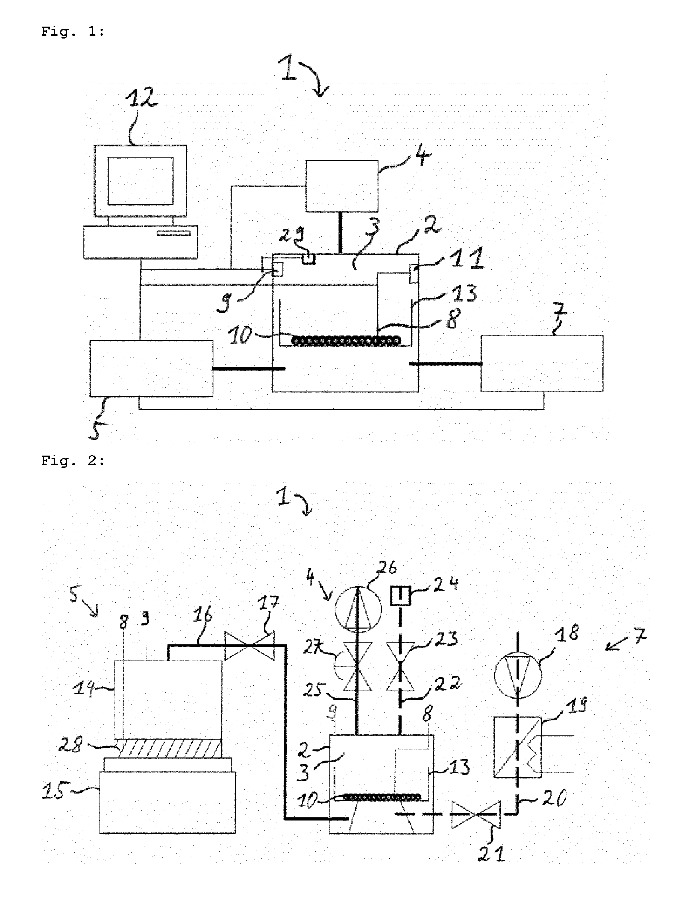

In Figur 1 ist in schematischer Darstellung eine erfindungsgemässe Vorrichtung 1 zum Pasteurisieren und/oder Sterilisieren eines Lebensmittels 10 gezeigt.

Die Vorrichtung 1 weist einen Behälter 2 mit einem Innenraum 3 auf, in dem eine Aufnahmeeinrichtung 13 angeordnet ist. In der Aufnahmeeinrichtung 13 mit einem Aufnahmevolumen von maximal 100 cm³ wird ein insbesondere stückiges Lebensmittel 10 aufgenommen.

Im Innenraum 3 des Behälters 2 sind ein Drucksensor 9, ein Temperatursensor 8 und ein Feuchtigkeitssensor 11 angeordnet zur Messung von Druck, Temperatur und Feuchtigkeit während der Behandlung, d. h. während des Sterilisierens und/oder Pasteurisierens des Lebensmittels 10. Der Temperatursensor 8 ist dabei im Kontakt mit zumindest einem Teil des Lebensmittels 10 angeordnet, um die Temperatur des Lebensmittels 10 während der Behandlung möglichst zuverlässig und genau bestimmen zu können.

Zudem weist die Vorrichtung 1 eine Dampfzuführungsvorrichtung 5 auf zur Zuführung von Dampf, bei dem es sich hier um Wasserdampf handelt, in den Behälter 2. Mittels dieses Wasserdampfes wird das Lebensmittel in Abhängigkeit von den Betriebsbedingungen pasteurisiert oder auch sterilisiert.

Weiter weist die Vorrichtung 1 eine Temperiereinrichtung 7 auf, die hier als Heissluftzufuhr ausgebildet ist. Vor der Zuführung von Wasserdampf mittels der Dampfzuführungsvorrichtung 5 wird das Lebensmittel 10 mittels der Temperatureinrichtung 7, d. h. mittels Heissluft auf eine Temperatur wenige Grade unter der zuvor gewählten Pasteurisierungstemperatur oder Sterilisierungstemperatur vortemperiert.

Weiter weist die Vorrichtung 1 eine Druckeinstellungsvorrichtung zur Einstellung des Drucks im Innenraum 3 des Behälters 2 auf. Durch die Einstellung des Drucks im Innenraum 3 kann beispielsweise gewählt werden, ob das Lebensmittel 10 pasteurisiert oder sterilisiert wird. Bei der Einstellung eines Drucks unter dem Umgebungsdruck erfolgt üblicherweise eine Pasteurisierung des Lebensmittels 10 und bei einer Einstellung des Drucks im Innenraum 3 über dem Umgebungsdruck erfolgt üblicherweise eine Sterilisierung.

Zudem weist die Vorrichtung 1 eine Inokulierungseinrichtung 29 zur Beaufschlagung des Lebensmittels 10 mit zumindest einem pathogenen Mikroorganismus auf.

Die Druckeinstellungsvorrichtung 4, die Dampfzuführungsvorrichtung 5, die Inokulierungseinrichtung 29 und die Temperiereinrichtung 7 sind jeweils steuerbar und/oder regelbar ausgebildet und mit einer als Computer ausgebildeten Steuer- und/oder Regeleinheit 12 verbunden. Zudem sind der Drucksensor 9, der Temperatursensor 8 und der Feuchtigkeitssensor 11 mit dem Computer verbunden.

Mittels des Computers sind die Druckeinstellungsvorrichtung 4, die Dampfzuführungsvorrichtung 5 und die Temperiereinrichtung 7 gemäss den Anforderungen des Verfahrens zur Behandlung des Lebensmittels 10 steuerbar und/oder regelbar. Beispielsweise können aufgrund im Computer gespeicherter Vorgaben für beispielsweise die Pasteurisierung von Mandeln die Druckeinstellungsvorrichtung 4, die Dampfzuführungsvorrichtung 5 und die Temperiereinrichtung 7 gesteuert werden.

Alternativ ist es jedoch auch möglich, dass eine Temperatur, ein Druck und eine Feuchtigkeit in Abhängigkeit von den Anforderungen der Behandlung aufgrund der Signale des Drucksensors 9, des Temperatursensors 8 und des Feuchtigkeitssensors 11 durch Regelung der Funktionsweise der Druckeinstellungsvorrichtung 4, der Dampfzuführungsvorrichtung 5 und der Temperiereinrichtung 7 geregelt werden.

Ein Verfahren zur Pasteurisierung von Mandeln als Lebensmittel 10 kann beispielsweise so erfolgen, dass in einem ersten Schritt die Mandeln mittels der Temperiereinrichtung 7 auf eine Temperatur von 80 °C temperiert werden, woraufhin ein Pasteurisierungsdruck von 0.5 bar eingestellt wird. Anschliessend erfolgt ein Zuführen des Wasserdampfs mittels der Dampfzuführungsvorrichtung 5 in den Innenraum 3 des Behälters 2, wodurch sich aufgrund des eingestellten Pasteurisierungsdruck eine Pasteurisierungstemperatur von etwa 81 °C ergibt.

Anschliessend an das vorstehend beschriebene Pasteurisierungsverfahren kann die erzielte Verminderung an pathogenen Keimen auf den Mandeln gemessen und somit die Effizienz des Pasteurisierungsverfahrens bestimmt, d. h. validiert werden. Mittels Speicherung von Temperatur, Druck und Feuchtigkeit in Abhängigkeit von der Zeit ist es somit möglich, derartige Verfahren zur Pasteurisierung sowie auch zur Sterilisierung eines Lebensmittels 10 zu validieren und zu verbessern.

In Figur 2 ist eine Vorrichtung 1 zur erfindungsgemässen Behandlung eines Lebensmittels 10 gemäss Figur 1 im Detail dargestellt, wobei die Vorrichtung 1 eine Dampfzuführungsvorrichtung 5 und eine Temperiereinrichtung 7 aufweist.

Von hier an und im folgenden bedeuten gleiche Referenzzeichen gleiche Komponenten in den Figuren.

In Figur 2 ist die Vorrichtung 1 gemäss Figur 1 detailliert dargestellt, wobei der besseren Übersicht halber die Steuer-und/Regeleinheit weggelassen wurde. Zudem weist die vorliegende Vorrichtung 1 im Unterschied zur Vorrichtung gemäss Figur 1 keinen Feuchtigkeitssensor und keine Inokulierungseinrichtung auf. Die Funktionsweise der Vorrichtung 1 gemäss Figur 2 stimmt jedoch im Wesentlichen mit der Funktionsweise der Vorrichtung gemäss Figur 1 überein.

Die Dampfzuführungsvorrichtung 5 umfasst gemäss Figur 2 eine Heizplatte 15 zur Aufheizung eines Wasserreservoirs 28, welches sich in einem Dampfkessel 14 befindet. In diesem Dampfkessel 14 sind ein Temperatursensor 8 zur Messung der Temperatur des Wasserreservoirs 28 sowie ein Drucksensor 9 zur Messung des Drucks im Dampfkessel 14 angeordnet. Über eine Dampfleitung 16 ist der Dampfkessel 14 mit dem Behälter 12 strömungsverbunden, so dass Wasserdampf in den Innenraum 3 des Behälters 2 gelangen kann. In der Dampfleitung 16 ist ein steuerbares und/oder regelbares Dampfventil 17 angeordnet, so dass die Dampfmenge gesteuert und/oder geregelt werden kann, welche vom Dampfkessel 14 in den Innenraum 3 des Behälters 2 gelangt.

Die Temperiereinrichtung 7 umfasst einen Ventilator 18 zur Förderung von Luft in eine Luftheizeinrichtung 19. Die in der Luftheizeinrichtung 19 erwärmte Luft wird zur Temperierung des Lebensmittels 10 in der Aufnahmeeinrichtung 13 durch eine Luftleitung 20, welche ein Strömungsventil 21 aufweist, in den Innenraum 3 des Behälters 2 gefördert. Mittels Steuerung und/oder Regelung des Ventilators 18, der Luftheizeinrichtung 19 oder auch des Strömungsventils 21 kann die Menge an temperierter Luft sowie die Temperatur der Luft, welche in den Innenraum 3 gefördert wird, gesteuert und/oder geregelt werden.

Die Druckeinstellungsvorrichtung 4 ist über die Druckleitung 25 in Strömungsverbindung mit dem Innenraum 3 des Behälters 2 verbunden. Zudem weist die Druckeinstellungsvorrichtung 4 ein Druckventil 27 und eine Pumpe 26 auf. Mittels Steuerung und/oder Regelung der Pumpe 26 und/oder des Druckventils 27 kann beispielsweise der Druck im Innenraum 3 des Behälters 2 eingestellt werden. Es kann beispielsweise ein Überdruck oder auch ein Unterdruck im Innenraum 3 eingestellt werden. Zudem weist die Druckeinstellungsvorrichtung 4 eine Ablassleitung 22 mit einem Ablassventil 23 und einem Filter 24 auf zum Ablassen von Wasserdampf oder auch zum Ablassen von Überdruck. Die Verwendung eines Filters 24 hat den Vorteil, dass im Wesentlichen keine Verunreinigungen aus dem Innenraum 3 in die Umgebung oder auch aus der Umgebung in den Innenraum 3 gelangen können.

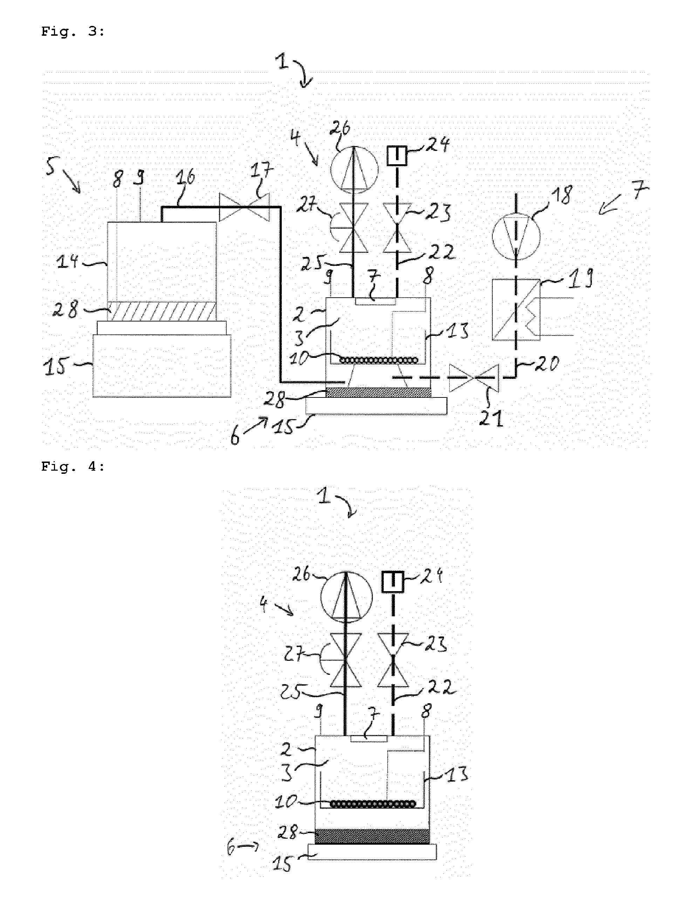

In Figur 3 ist eine alternative, erfindungsgemässe Vorrichtung gemäss Figur 2 dargestellt, wobei die Vorrichtung gemäss Figur 3 eine zusätzliche Dampferzeugungsvorrichtung 6 zur Erzeugung von Wasserdampf im Innenraum 3 des Behälters 2 aufweist.

Zudem weist die Vorrichtung 1 gemäss Figur 3 eine zusätzliche Temperiereinrichtung 7 auf, die als Heizstrahler ausgebildet und im Innenraum 3 des Behälters 2 angeordnet ist. Hierdurch lässt sich eine möglichst hohe Flexibilität von Pasteurisierungs-und/oder Sterilisierungsverfahren erreichen.

Figur 4 zeigt eine weitere alternative erfindungsgemässe Vorrichtung 1 zur Pasteurisierung und/oder Sterilisierung eines Lebensmittels 10.

Die vorliegende Vorrichtung 1 weist im Gegensatz zu Figur 3 keine Dampfzuführungsvorrichtung 5 und auch keine Temperiereinrichtung bestehend aus Ventilator, Luftheizeinrichtung, Luftleitung und Strömungsventil auf. Die Vorrichtung gemäss Figur 4 weist eine im Innenraum 3 des Behälters 2 angeordnete Temperiereinrichtung 7 auf, die als Heizstrahler ausgebildet ist.

Diese Ausgestaltung der Vorrichtung hat den Vorteil, dass eine sehr kompakte Ausgestaltung der erfindungsgemässen Vorrichtung möglich ist.

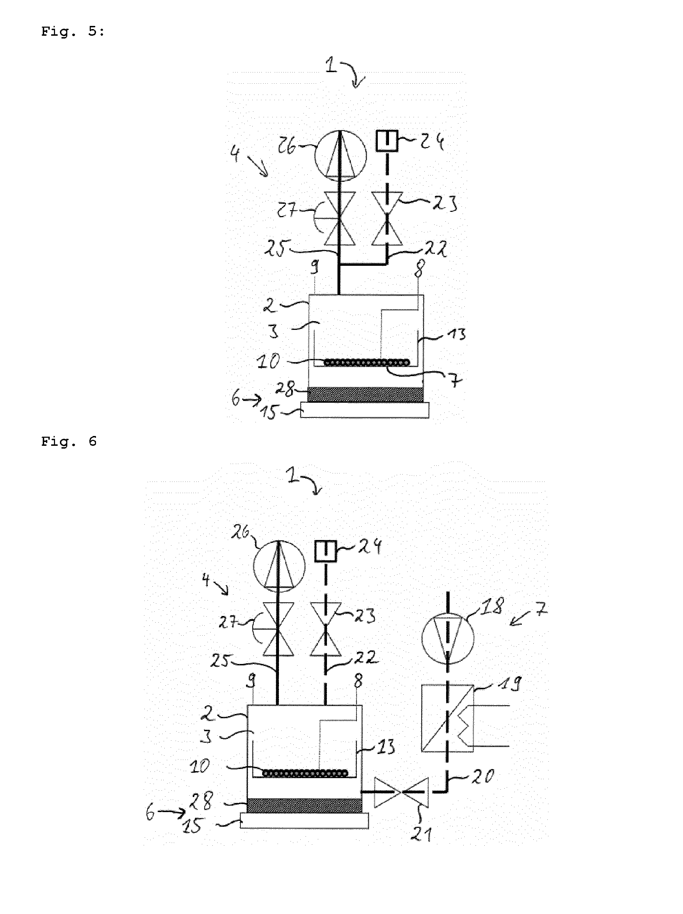

In Figur 5 ist eine Vorrichtung 1 gemäss Figur 4 dargestellt, wobei im Unterschied zu Figur 4 vorliegend die Temperiereinrichtung als Temperierplatte ausgebildet ist, die in der Aufnahmeeinrichtung 13 angeordnet ist.

In Figur 6 ist eine weitere alternative erfindungsgemässe Vorrichtung mit einer Temperiereinrichtung 7 wie in Figur 2 erläutert und einer Dampferzeugungsvorrichtung gemäss Figur 5 dargestellt.

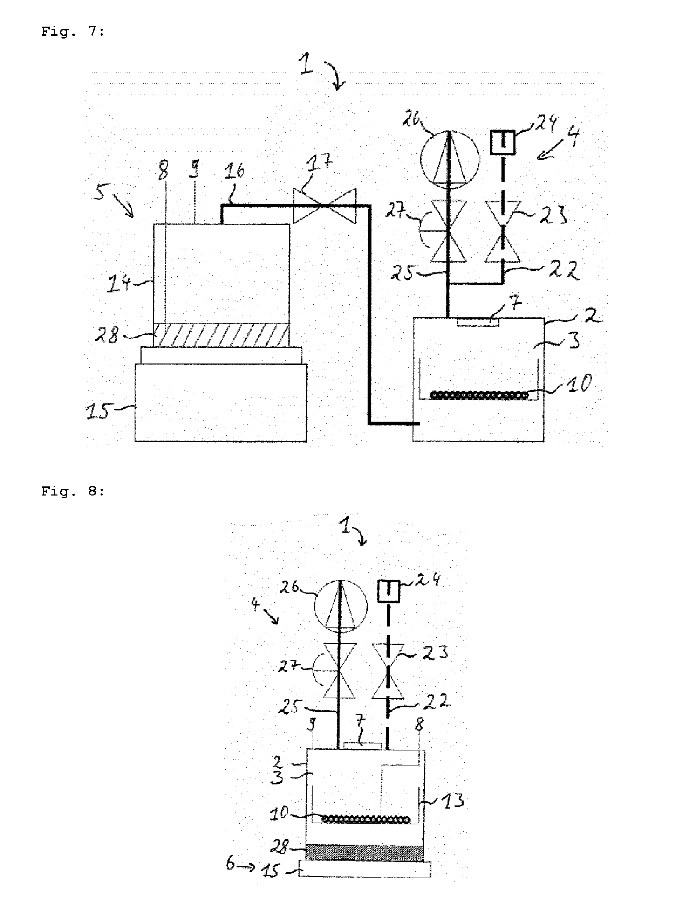

In Figur 7 ist eine weitere erfindungsgemässe Vorrichtung 1 mit einer Dampfzuführungsvorrichtung 5 gemäss Figur 2 und einer Temperiereinrichtung 7 gemäss Figur 4 dargestellt.

Im Unterschied zu den vorstehenden Ausführungsbeispielen sind gemäss Figur 7 im Innenraum 3 des Behälters 2 keine Sensoren wie beispielsweise Temperatur- oder auch Drucksensoren angeordnet. Eine derartige Vorrichtung lässt sich kostengünstig herstellen, wobei im Betrieb lediglich eine Steuerung der Vorrichtung 1 möglich ist.

Figur 8 zeigt eine schematische Darstellung einer erfindungsgemässen Vorrichtung 1 gemäss Figur 4 mit einer alternativen Anordnung der Temperiereinrichtung 7.

Im Gegensatz zur Figur 4 ist in Figur 8 die Temperiereinrichtung 7 in Wärmeleitungsverbindung mit dem Innenraum 3 angeordnet. Mit anderen Worten steht die Temperiereinrichtung 7 in direktem Kontakt mit dem Behälter 2 und erwärmt somit den Innenraum 3, wodurch die Temperierung des Lebensmittels 10 erreicht wird.

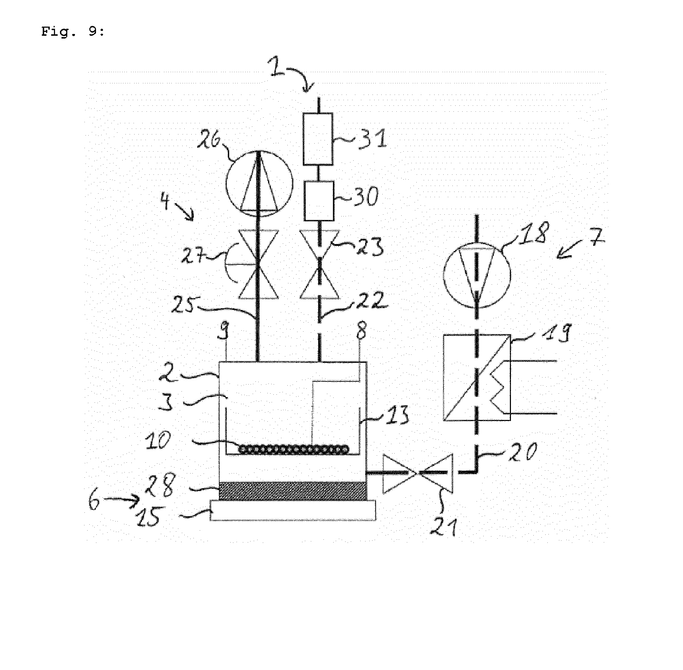

Figur 9 zeigt eine schematische Darstellung einer erfindungsgemässen Vorrichtung 1 mit einem Kondensator und einer steuerbaren Dampfpumpe 31, die beispielsweise mit der Steuer- und/oder Regeleinheit gemäss Figur 1 verbindbar ist.

Im Betrieb kann Wasserdampf, der durch Erhitzen des Wasserreservoirs 28 mittels einer leistungsgesteuerten Heizplatte 15 erzeugt wird, bei Bedarf durch Öffnen des Ablassventils 23 in die Ablassleitung 22 mittels der regelbaren Dampfpumpe 31 gefördert werden. Anschliessend strömt der Wasserdampf durch den Kondensator 30, in dem Wasser abgeschieden wird. Dadurch verringert sich das zu fördernde Volumen an Wasserdampf. Auch die Dampfpumpe 31 ist beispielsweise mit Steuer- und/oder Regeleinheit gemäss Figur 1 verbindbar.

Alternativ zur Anordnung lediglich eines Kondensators 30 in der Ablassleitung können zur weiteren Reduzierung des zu fördernden Volumens auch beispielsweise zwei Kondensatoren 30 in Reihe angeordnet werden.

Die Dampferzeugung mittels der Heizplatte erfolgt lediglich bei Bedarf im Innenraum 3. Mittels des Drucksensors 9 wird detektiert, wenn ein Druckabfall im Innenraum 3 gemessen wird. Bei diesem Ereignis erfolgt ein Einschalten der Heizplatte 15 oder eine Erhöhung der Heizleistung der Heizplatte. Dies wird mittels der Steuer- und/oder Regeleinheit gemäss Figur 1 durchgeführt.

## Patentansprüche

1. Vorrichtung (1) zum Sterilisieren und/oder Pasteurisieren eines Lebensmittels (10), umfassend einen Behälter (2) mit einem Innenraum (3) zur Aufnahme des Lebensmittels (10), eine steuerbare und/oder regelbare Druckeinstellungsvorrichtung (4) zur Einstellung eines Überdrucks und/oder Unterdrucks im Innenraum (3) und eine steuerbare und/oder regelbare Einrichtung zur Beaufschlagung des Innenraums (3) mit Dampf, insbesondere Wasserdampf, wobei die Vorrichtung (1) ein Aufnahmevolumen im Innenraum (3) für das Lebensmittel (10) im Bereich von 2 bis 5000 cm³, bevorzugt im Bereich von 2 bis 100 cm³ und besonders bevorzugt im Bereich von 2 bis 10 cm³ aufweist und wobei die Vorrichtung (1) eine Temperiereinrichtung (7) zur Temperierung des Lebensmittels (10), insbesondere vor der Beaufschlagung des Lebensmittels (10) mit Dampf, umfasst.

2. Vorrichtung (1) nach Anspruch 1, **dadurch gekennzeichnet, dass** die Einrichtung zur Beaufschlagung mit Dampf als Dampfzuführungsvorrichtung (5) ausgebildet ist zur Zuführung von Dampf in den Innenraum (3).

3. Vorrichtung (1) nach Anspruch 1 oder 2, **dadurch gekennzeichnet, dass** die Einrichtung zur Beaufschlagung mit Dampf als Dampferzeugungsvorrichtung (6) ausgebildet ist zur Erzeugung von Dampf im Innenraum (3).

4. Vorrichtung (1) nach einem der Ansprüche 1 bis 3, **dadurch gekennzeichnet, dass** die Druckeinstellungsvorrichtung (4) als steuerbare und/oder regelbare Vakuumpumpe, insbesondere als Wasserstrahlpumpe, ausgebildet ist, welche in Strömungsverbindung mit dem Innenraum (3) steht, wobei insbesondere zwischen dem Innenraum (3) und der Vakuumpumpe ein steuerbares und/oder regelbares Ventil angeordnet ist.

5. Vorrichtung (1) nach einem der Ansprüche 1 bis 4, **dadurch gekennzeichnet, dass** die Vorrichtung (1) zumindest einen Sensor zur Messung zumindest einer Betriebsgrösse im Innenraum (3) aufweist, insbesondere zumindest einen Drucksensor (9) und optional zumindest einen der folgenden Sensoren:
Temperatursensor (8), Feuchtigkeitssensor (11).

6. Vorrichtung (1) nach einem der Ansprüche 1 bis 5, **dadurch gekennzeichnet, dass** die Temperiereinrichtung (7) als Einrichtung zur Zuführung eines insbesondere konditionierten Gases, insbesondere erwärmter Luft, ausgebildet ist.

7. Vorrichtung (1) nach einem der Ansprüche 1 bis 5, **dadurch gekennzeichnet, dass** die Temperiereinrichtung (7) im Innenraum (3) und/oder in Wärmeleitungsverbindung mit dem Innenraum (3) angeordnet ist zur Temperierung des Lebensmittels (10) im Innenraum (3), wobei die Temperiereinrichtung (7) insbesondere als Heizstrahler und/oder Heizplatte ausgebildet ist.

8. Vorrichtung (1) nach einem der Ansprüche 1 bis 7, **dadurch gekennzeichnet, dass** die Vorrichtung (1) mit einer Steuer-und/oder Regeleinheit (12), insbesondere einem Computer, verbunden ist zur Steuerung und/oder Regelung zumindest einer der Betriebsgrössen Temperatur, Druck und Feuchtigkeit oder beliebigen Kombinationen daraus.

9. Vorrichtung (1) nach Anspruch 8, **dadurch gekennzeichnet, dass** in der Steuer- und/oder Regeleinheit (12) zumindest eine der Betriebsgrössen Temperatur, Druck und Feuchtigkeit oder beliebige Kombinationen daraus speicherbar sind, insbesondere als Funktion der Zeit.

10. Verfahren zum Sterilisieren und/oder Pasteurisieren eines insbesondere partikulären Lebensmittels (10), insbesondere mit einer Vorrichtung (1) gemäss einem der vorstehenden Ansprüche, umfassend die folgenden Schritte:
- Bereitstellen einer Vorrichtung (1) umfassend einen Behälter (2) mit einem Innenraum (3) zur Aufnahme des Lebensmittels (10), eine steuerbare und/oder regelbare Druckeinstellungsvorrichtung (4) zur Einstellung eines Überdrucks und/oder Unterdrucks im Innenraum (3) und eine steuerbare und/oder regelbare Einrichtung zur Beaufschlagung des Innenraums (3) mit Dampf, insbesondere Wasserdampf, wobei die Vorrichtung (1) ein Aufnahmevolumen im Innenraum (3) für das Lebensmittel (10) im Bereich von 2 bis 5000 cm³ aufweist und wobei die Vorrichtung (1) eine Temperiereinrichtung (7) zur Temperierung des Lebensmittels (10) umfasst;
- Steuern und/oder Regeln eines Drucks, insbesondere eines Überdrucks und/oder eines Unterdrucks, im Innenraum (3);
- Temperieren des Lebensmittels auf eine Temperatur kleiner oder gleich der Pasteurisierungs- und/oder Sterilisierungstemperatur im Innenraum (3);
- Beaufschlagen des Innenraums (3) mit Dampf;
- Sterilisieren und/oder Pasteurisieren des temperierten Lebensmittels (10) mittels des Dampfes zur Erzielung einer Reduktion der Anzahl eines auf und/oder in dem Lebensmittel (10) vorhandenen insbesondere pathogenen Mikroorganismus zumindest um den Faktor log 3, bevorzugt zumindest um den Faktor log 4 und besonders bevorzugt zumindest um den Faktor log 5.

11. Verfahren gemäss Anspruch 10, **dadurch gekennzeichnet, dass** das Lebensmittel (10) vor dem Fördern in den Innenraum (3) temperiert wird.

12. Verfahren gemäss Anspruch 10 oder 11, **dadurch gekennzeichnet, dass** das Lebensmittel (10) vor dem Temperieren und/oder vor dem Sterilisieren und/oder Pasteurisieren mit einem pathogenen Mikroorganismus, insbesondere einem Salmonellen-Stamm, inokuliert wird.

13. Verfahren zur Validierung eines industriellen Sterilisierungs- und/oder Pasteurisierungsverfahrens, umfassend die folgenden Schritte:
- Bereitstellen einer Vorrichtung (1) gemäss einem der Ansprüche 1 bis 9;
- Durchführen eines Verfahrens gemäss einem der Ansprüche 10 bis 12;
- Bestimmung der erzielten Reduktion eines auf und/oder in dem Lebensmittel (10) vorhandenen insbesondere pathogenen Mikroorganismus.

14. Verfahren nach Anspruch 13, **dadurch gekennzeichnet, dass** das industrielle Sterilisierungs- und/oder Pasteurisierungsverfahren anhand der erzielten Reduktion des pathogenen Mikroorganismus und zumindest einer gespeicherten Betriebsgrösse Temperatur, Druck und Feuchtigkeit oder beliebigen Kombinationen daraus optimiert wird.

15. Verwendung einer Vorrichtung (1) gemäss einem der Ansprüche 1 bis 9, insbesondere zur Durchführung eines Verfahrens gemäss einem der Ansprüche 10 bis 14 zur Sterilisierung und/oder Pasteurisierung eines Lebensmittels (10), insbesondere proteinhaltigen Lebensmitteln (10), stärkehaltigen Lebensmitteln (10) und ölhaltigen Lebensmitteln (10) oder beliebigen Kombinationen daraus, und/oder zur Validierung eines industriellen Sterilisierungs- und/oder Pasteurisierungsverfahrens.
